# EUROPÄISCHE PATENTANMELDUNG

(11) **EP 1 375 313 A2**
(43) Veröffentlichungstag der Anmeldung: **02.01.2004**
(21) Anmeldenummer: 03013384.7
(22) Anmeldetag: 18.06.2003
(51) Int. Cl.: B62D 33/04

(54) **Fahrzeugaufbau**

(30) Priorität: 18.06.2002 CH 10372002
(71) Anmelder: BIERI BLACHEN AG, CH-6022 Grosswangen (CH)
(72) Erfinder: Bieri, Fritz, 6022 Grosswangen (CH)
(74) Vertreter: Blum, Rudolf Emil Ernst

(57) **Zusammenfassung**

Die vorliegende Erfindung betrifft einen Nutzfahrzeugaufbau mit einer schiebbaren Blachenseitenwand (1) und einem schiebbaren Seitenwandmittelpfosten (2), wobei der Seitenwandmittelpfosten (2) fest mit der Blachenseitenwand (1) verbunden ist und bei einem Verschieben derselben ebenfalls verschoben wird. Die Ladefläche (8) des Fahrzeugaufbaus wird seitlich von Seitenlängsträgern (4) begrenzt, die auf ihrer Oberseite jeweils eine in Längsrichtung verlaufende und zur Ladefläche (8) hin hinterschnittene Befestigungsnut (9) zur Befestigung von hakenförmigen Spanngurtbefestigungselementen (10) aufweist. Die rückseitigen Enden der Blachenseitenwand (1) sind jeweils durch Einhängen von einem mit Spannhebeln (17) versehenen Hakenelement (18) in eine Profilnut (19) am jeweiligen Eckpfosten (15) des Fahrzeugaufbaus festlegbar, wobei die Profilnut (19) gleichzeitig auch der formschlüssigen Befestigung eines Wasserabweiserprofils (31) am Eckpfosten (15) dient.

Ein derartiger Fahrzeugaufbau ist günstig in der Herstellung, weist ein geringes Eigengewicht auf und ist einfach und sicher in der Bedienung.

## Beschreibung

Die vorliegende Erfindung betrifft Fahrzeugaufbauten, eine Blache, einen Zwischenpfosten und einen Eckpfosten für Fahrzeugaufbauten sowie Profilhalbzeugmaterial für die Herstellung solcher Zwischenpfosten oder Eckpfosten gemäss den Oberbegriffen der unabhängigen Patentansprüche.

Der Fahrzeugaufbau ist der Teil eines Nutzfahrzeugs, welcher die Ladefläche und gegebenenfalls einen ganz oder teilweise umschlossenen Laderaum um diese herum bildet. Erst durch ihn wird aus dem im wesentlichen verwendungsneutralen Fahrzeugchassis ein Nutzfahrzeug für spezifische Transportaufgaben, wie z.B. ein Tankfahrzeug, ein Kipper oder ein Transporter mit einem geschlossenen, kastenförmigen Laderaum für den Transport von pallettierten Gütern.

Bei letztgenannten Nutzfahrzeugen wird der Fahrzeugaufbau bevorzugterweise als Plane-und-Spriegelkonstruktion mit einer ebenen, durchgehenden Ladefläche ausgeführt, wobei die Blachenseitenwände in Längsrichtung verschiebbar sind, so dass der hinter dieser angeordnete Laderaum zum Be- und Entladen, z.B. mit einem Gabelstapler, zugreifbar wird. Handelt es sich um längere Aufbauten, so weist die Tragkonstruktion Seitenwandmittelpfosten auf, welche zumeist zum Be- und Entladen entfernt und danach wieder an ihrer vorschriftsgemässen Position angeordnet werden müssen. Hierdurch entsteht ein nicht unwesentlicher Bedienungsaufwand und es kann zu Fehlbedienungen kommen. Zudem besteht bei entnehmbaren Mittelpfosten die Gefahr, dass diese durch Unachtsamkeit verloren gehen. Das Verschliessen und Spannen der Blachenseitenwände erfolgt, indem die Enden derselben mit Spannhaken an den Eckpfosten festgelegt werden. Hierzu werden geeignete Ausfräsungen oder Applikationen an den Eckpfosten angebracht, wodurch deren Herstellung kostenintensiv ist und diese womöglich geschwächt werden.

Sind im Bereich der Eckpfosten des Fahrzeugaufbaus zusätzliche Funktionselemente, wie z.B. Wasserabweiser, Scharniere oder Blachenspannmechanismen, zu befestigen, so werden diese durch Aufschrauben oder Aufnieten auf die Eckpfosten, gegebenenfalls nach vorher erfolgter Nachbearbeitung derselben, befestigt, was mit einem entsprechenden Arbeitsaufwand verbunden ist und einer Standardisierung entgegensteht.

Weist der Fahrzeugaufbau eine grosse Länge auf, so sind zusätzlich zu den Eckpfosten Zwischenpfosten erforderlich, um die nötige Stabilität sicherzustellen. Diese Zwischenpfosten werden heute aus eigens hierfür hergestellten Profilhalbzeugmaterialien gefertigt, so dass sie pro Fahrzeug gesehen relativ teuer sind und den Lager- bzw. Logistikaufwand erhöhen.

Es stellt sich daher die Aufgabe, Fahrzeugaufbauten sowie Bauteile für Fahrzeugaufbauten zur Verfügung zu stellen, welche die Nachteile des Standes der Technik nicht aufweisen oder zumindest teilweise vermeiden.

Diese Aufgabe wird von den Fahrzeugaufbauten sowie der Blache, dem Zwischenpfosten und dem Eckpfosten gemäss den unabhängigen Patentansprüchen gelöst.

In einem ersten Aspekt der Erfindung weist der Fahrzeugaufbau, welcher bevorzugterweise der Aufbau eines Strassenfahrzeugs ist, mindestens eine Blachenseitenwand auf, welche sich zwischen einem oberen Seitenlängsträger und einem unteren Seitenlängsträger einer Tragstruktur des Fahrzeugaufbaus erstreckt. Ebenfalls zwischen diesen Seitenlängsträgern angeordnet ist ein oder sind mehrere Seitenwandmittelpfosten, welche den oberen und den unteren Seitenlängsträger als Teil der Tragstruktur miteinander verbinden, derart, dass der obere Seitenlängsträger mit diesen auf dem unteren Seitenlängsträger abstützbar ist. Die Blachenseitenwand und der oder die Seitenwandmittelpfosten sind in Längsrichtung entlang den Seitenlängsträgern verschiebbar, wodurch bevorzugterweise an beliebiger Längsposition ein Zugriff auf den hinter der Blachenseitenwand befindlichen Laderaum möglich ist. Dabei sind die Blachenseitenwand und der oder die Seitenwandmittelpfosten derartig miteinander wirkverbunden, dass der oder die Seitenwandmittelpfosten bei einem beliebigen Verschieben der Blachenseitenwand entlang der Längsträger, z.B. bei einem Raffen derselben zu einem Ende hin zwecks Freigabe des Zugriffs auf den hinter dem anderen Ende befindlichen Ladeflächenabschnitt, mit ihren Erstreckungen in Längsrichtung der Seitenlängsträger immer innerhalb der Erstreckung in Längsrichtung der Seitenlängsträger der verschobenen Blachenseitenwand verbleiben und bei einem vollständigen Schliessen der Blachenseitenwand jeweils automatisch an ihrer für den Transportbetrieb vorgesehenen Längsposition angeordnet werden. Mit anderen Worten gesagt sind der oder die Seitenwandmittelpfosten bei Draufsicht von aussen her auf die Blachenseitenwand also bei jeder durch Verschiebung einstellbaren Position der Blachenseitenwand immer durch diese verdeckt, wozu sie gegebenenfalls zusammen mit der Blachenseitenwand verschoben werden und für den Fall, dass eine Verschiebung derselben beim Öffnen der Blachenseitenwand stattgefunden hat, beim Schliessen der Blachenseitenwand automatisch wieder an ihrer Ausgangsposition angeordnet werden. Hierdurch ergibt sich der Vorteil, dass zusätzliche Handgriffe zum Entfernen etwaiger Seitenwandmittelpfosten aus dem Zugriffsbereich entfallen und etwaige Bedienungsfehler, wie z.B. ein Fehlpositionieren oder gar ein Vergessen des Zurückstellens der Seitenwandmittelpfosten, ausgeschlossen sind, was wiederum zu einer Zeitersparnis beim Beund Entladen und zu einer erhöhten Betriebssicherheit führt.

In einer bevorzugten Ausführungsform des Fahrzeugaufbaus ist der oder sind die Seitenwandmittelpfosten direkt mit der Blachenseitenwand verbunden, derart, dass sich diese jeweils bei einem Verschieben des Teils der Blachenseitenwand, welcher dem jeweiligen Seitenwandmittelpfosten in dessen für den Transport vorgesehenen Position bei vollständig geschlossener Blachenseitenwand am nächsten liegt, automatisch mit diesem Seitenwandteil mitverschieben.

Dieses wird bevorzugterweise dadurch erreicht, dass der jeweilige Seitenwandmittelpfosten in einer oder in mehreren an diesem Blachenseitenwandteil gebildeten Umschliessungen, wie z.B. Schlaufen aus Blachenmaterial oder Lappen mit Klettverschlüssen, angeordnet wird. Hierdurch lässt sich die Wirkverbindung zwischen Seitenwandmittelpfosten und Blachenseitenwand auf besonders einfache und kostengünstige Art und Weise realisieren.

In einer weiteren bevorzugten Ausführungsform des Fahrzeugaufbaus bilden der Seitenwandmittelpfosten und die Blachenseitenwand eine intergrale Einheit, derart, dass Seitenwandmittelpfosten und Blachenseitenwand unverlierbar, z.B. durch Verschrauben, miteinander verbunden sind oder bevorzugterweise sogar untrennbar miteinander verbunden sind, d.h. zur Trennung einer Zerstörung bestimmter Elemente bedürfen, wie dies z.B. beim Vernieten oder Einnähen in eine Umschliessung der Fall ist. Durch eine solche Bauweise lässt sich ein Verlieren der Seitenwandmittelpfosten sicher verhindern und in letztgenanntem Fall auch eine Fehlinstallation derselben ausschliessen.

In noch einer weiteren bevorzugten Ausführungsform des Fahrzeugaufbaus ist zumindest eines der beiden Enden der Blachenseitenwand mit einem starren, sich zwischen dem oberen und dem unteren Seitenlängsträger erstreckenden Schiebetürenelement ausgestattet, mit welchem sich dieses Ende entlang der Seitenlängsträger verschieben und zumindest bei vollständig geschlossener Blachenseitenwand festlegen lässt, wobei bevorzugterweise eine Zugspannung in der Blachenseitenwand erzeugt wird. Auf diese Weise wird die Bedienung der Blachenseitenwand deutlich erleichtert und deren Lebensdauer erhöht. Auch ergibt sich ein stabiler und dicht abschliessbarer Aufbau.

In noch einer weiteren bevorzugten Ausführungsform des Fahrzeugaufbaus werden die Blachenseitenwand und der oder die Seitenwandmittelpfosten am oberen und/oder am unteren Seitenlängsträger entlang gemeinsamer Längsführungen, z.B. in Führungsnuten oder entlang von Führungslappen, geführt. Hierdurch sind die Seitenwandmittelpfosten unverlierbar am Fahrzeugaufbau angeordnet und die Seitenlängsträger können besonders schmal ausgeführt und aus einfach aufgebauten, robusten Profilen hergestellt werden, wodurch Laderaum gewonnen und Kosten und Gewicht eingespart werden.

Ein zweiter Aspekt der Erfindung betrifft eine Blache mit einem oder mehreren integrierten Seitenwandmittelpfosten für einen Fahrzeugaufbau gemäss dem ersten Aspekt der Erfindung. Durch Nachrüstung mit einer solchen Blache lassen sich aus bestehenden Fahrzeugaufbauten mit Blachenseitenwänden erfindungsgemässe Fahrzeugaufbauten bilden.

Ein dritter Aspekt der Erfindung betrifft einen Fahrzeugaufbau, bevorzugterweise einen Strassenfahrzeugaufbau, mit Eckpfosten, wobei es bevorzugt ist, wenn dieser gemäss dem ersten Aspekt der Erfindung ausgebildet ist. Mindestens einer der Eckpfosten und bevorzugterweise die beiden hinteren oder vorderen oder alle Eckpfosten sind einstückig oder mehrstückig aus Profilmaterial gebildet, so dass sie über ihre Längserstreckung gesehen im wesentlichen überall den gleichen Querschnitt aufweisen. In einer Aussenfläche dieser Eckpfosten, welche an einer Aussenseite des Fahrzeugaufbaus angeordnet ist bzw. einen Teil derselben bildet, befindet sich eine Profilnut, die sich über die gesamte Länge des Eckpfostens erstreckt und von dieser Aussenseite her gesehen hinterschnitten ist, derart, dass eine Befestigung eines Funktionselements am Eckpfosten durch Formschluss quer zur Längsrichtung des Eckpfostens zwischen den Begrenzungen der Profilnut und einer in die Profilnut eintretenden Körperlichkeit des Funktionselements, z.B. einer Kederprofilnase, möglich ist. Um diesen Formschluss herbeizuführen, ist es je nach Ausgestaltung der Profilnut und der Körperlichkeit des Funktionselements vorgesehen, die Körperlichkeit des Funktionselements entweder in Längsrichtung in die Profilnut einzuschieben oder diese von aussen her in die Profilnut einzuklinken oder einzurasten. Durch eine solche Ausgestaltung der Eckpfosten können je nach Verwendungszweck und gewünschter Ausstattung an dem gleichen Fahrzeugaufbau unterschiedliche Funktionselemente, wie z.B. Wasserabweiserprofile, Türscharniere oder Anfahrschutzleisten, befestigt werden, ohne dass es hierzu einer spezifischen Bearbeitung bedarf. Dieses wiederum vereinfacht die Lagerhaltung und Produktion und senkt die Herstellungskosten. Sollte eine zusätzliche Fixierung in Längsrichtung der Eckpfosten erforderlich sein, genügt hierfür eine einzelne Schraube.

Bevorzugterweise befindet sich die Profilnut dabei in einer Aussenfläche des Eckpfostens, die an der Stirnseite oder an der Rückseite des Fahrzeugaufbaus angeordnet ist bzw. Teil derselben ist. Hierdurch lässt sich ein Funktionselement in der Profilnut befestigen, ohne dass dadurch die Breite des Fahrzeugaufbaus verändert wird.

Auch ist es bevorzugt, wenn die Aussenfläche des Eckpfostens, in welcher die Profilnut angeordnet ist, im wesentlichen eben ist, wobei die Profilnut mit Vorteil im wesentlichen senkrecht zu dieser Aussenfläche in den Eckpfosten eindringt. Hierdurch ergibt sich der Vorteil, dass keine Überstände entstehen, welche die Abmessungen des Fahrzeugaufbaus unnötig vergrössern und einer glatten, energiesparenden Ausgestaltung der Aussenkontur des Aufbaus entgegenstehen.

Ist der Eckpfosten oder sind die Eckpfosten aus einem einstückigen Profilmaterialabschnitt gebildet, so wird eine hohe Festigkeit bei geringem Gewicht und eine weitere Reduzierung der Teilevielfalt ermöglicht. Besonders geeignet sind hier stranggepresste oder gezogene Metallprofile, bevorzugterweise aus Aluminium.

Weist der Nutgrund der Profilnut eine kreisförmige Querschnittsform auf, so kann eine kederförmige Körperlichkeit eines Funktionselements durch Einschieben in Längsrichtung in der Profilnut befestigt werden. Solche Formschlussverbindungen quer zur Profillängsrichtung haben sich im Fahrzeugbau bewährt.

In einer bevorzugten Ausführungsform des Fahrzeugaufbaus ist ein Funktionselement an dem Eckposten befestigt durch Formschluss quer zur Längserstreckung des Eckpfostens zwischen einer in die Profilnut eintretenden Körperlichkeit des Funktionselements und den Begrenzungen der Profilnut.

Bevorzugte Funktionselemente sind starre oder elastische Profilelemente, beispielsweise Wasserabweiserprofile, Scharnierprofile oder Anfahrschutzprofile, welche sich mit Vorteil über die gesamte Länge des Eckpfostens erstrecken.

Auch ist es vorgesehen, dass das Funktionselement einen Spannmechanismus für eine Blachenseitenwand umfasst, beispielsweise eine Spannrolle mit Antriebsmitteln zum Spannen einer Blachenseitenwand durch teilweises Aufrollen derselben. Hierdurch lassen sich solche Mechanismen auf einfache und sehr stabile Weise mit den Eckpfosten verbinden.

Ein vierter Aspekt der Erfindung betrifft einen Fahrzeugaufbau, bevorzugterweise nach dem ersten oder dem dritten Aspekt der Erfindung, mit einer in Längsrichtung verschiebbaren Blachenseitenwand. Mindestens eines der beiden Enden der Blachenseitenwand ist durch Einhängen von einem oder mehreren mit Spannmitteln versehenen Hakenelementen in eine durchgehende Profilnut in einem Eckpfosten des Fahrzeugaufbaus an diesem Eckpfosten festlegbar. Durch diese Konstruktion ergibt sich der Vorteil, dass der Eckpfosten ohne wesentliche Nacharbeiten durch Ablängen aus einem Profilmaterial hergestellt werden kann, wozu bevorzugterweise ein einstückiges Aluminiumprofilhalbzeugmaterial verwendet wird, wodurch Kosten eingespart werden können und eine Schwächung des Pfostenprofils verhindert wird.

In einer bevorzugten Ausführungsform des Fahrzeugaufbaus ist zudem ein Blachenrückwandelement formschlüssig am Eckpfosten befestigt, was mit Vorteil mittels eines Keders in einer Profilnut des Eckpfostens geschieht, so dass auch hier bei Verwendung eines Eckpfostens aus einem geeigneten Profilmaterial auf Nachbearbeitungen verzichtet werden kann.

Vorteilhafterweise tritt dabei das Blachenrückwandelement unter einer Umlenkung, bevorzugterweise von etwa 90°, in die Profilnut ein, in der es formschlüssig befestigt ist, so dass das verspannte Blachenrückwandelement durch Umlenkung um eine gerade Kante eine möglichst glatte Blachenfläche bildet.

Wird das oder werden die Hakenelemente der Blachenseitenwand zum Befestigen derselben am Eckpfosten in die gleiche Profilnut eingehängt, in welcher auch das Blachenrückwandelement befestigt ist, so ergibt sich ein besonders einfaches Pfostenprofil.

Bevorzugterweise treten die freien Enden der Hakenelemente dabei im wesentlichen in der gleichen Richtung wie das Blachenrückwandelement in die Profilnut ein, so dass beide in der Profilnut im wesentlichen parallel zueinander verlaufen. Durch diese Ausgestaltungen ergibt sich ein besonders kompakter Eckpfosten.

In einer weiteren bevorzugten Ausführungsform ist die Profilnut, in welche die Hakenelemente der Blachenseitenwand einhängbar sind, auf derjenigen Aussenseite des Eckpfostens angeordnet, welche im wesentlichen senkrecht zur Blachenseitenwand liegt, also zur Vorderoder Rückseite eines rechteckigen Fahrzeugaufbaus orientiert ist. Eine derartig Anordnung der Profilnut ermöglicht eine besonders einfache Konstruktion.

Ist ein Ende der Blachenseitenwand als starres Schiebetürenelement ausgebildet, welches bei geschlossener Blachenseitenwand mit einem oder mehreren Hakenelementen, bevorzugterweise unter Erzeugung einer Zugspannung in der Blachenseitenwand, mit dem Eckpfosten verbunden werden kann, so ergibt sich ein besonders stabiler Aufbau, der eine einfache Bedienung der Blachenseitenwand und eine hohe Lebensdauer derselben ermöglicht.

Ein fünfter Aspekt der Erfindung betrifft einen Fahrzeugaufbau, bevorzugterweise einen Strassenfahrzeugaufbau, welcher bevorzugterweise gemäss dem ersten, dritten oder vierten Aspekt der Erfindung ausgebildet ist und Eckpfosten sowie zwischen den Eckpfosten angeordnete Zwischenpfosten aus Profilmaterial aufweist. Die Zwischenpfosten sind jeweils aus zwei parallel zueinander angeordneten Pfostenprofilen gebildet, welche mit einem Verbindungsprofil verbunden sind, derart, dass sie über ihre gesamte Längserstreckung formschlüssig in Richtung quer zu ihrer Längserstreckung zu einer festen Einheit miteinander verbunden sind. Hierdurch wird es möglich, die Zwischenpfosten aus konstengünstigen kleineren Profilen zu bilden. Auch ergibt sich der Vorteil, dass bei geeigneter Ausgestaltung der für den Fahrzeugaufbau verwendeten Profilgeometrien die Verwendung von bereits für andere Zwecke verwendeter Profilmaterialien möglich wird, so dass die Lagerhaltung vereinfacht und Kosten eingespart werden können.

In einer bevorzugten Ausführungsform kommen als Pfostenprofile identische Profile zum Einsatz, welche bevorzugterweise derartig zueinander angeordnet werden, dass ihre Querschnitte spiegelbildlich zueinander sind.

Werden die Pfostenprofile direkt aneinander angrenzen miteinander verbunden, was bevorzugterweise unter Bildung grossflächiger Berührungsflächen geschieht, so entsteht ein besonders stabiler Zwischenpfosten. Verlaufen die Berührungsflächen dabei im wesentlichen quer zu einer vorgesehenen Fahrtrichtung, so lassen sich von der Seitenwand des Fahrzeugaufbaus gesehen symmetrische Zwischenpfosten bilden, was insbesondere bei Aufbauten mit durch den Zwischenpfosten geteilten schiebbaren Blachenseitenwänden wünschenswert ist.

Mit Vorteil befindet sich das Verbindungsprofil im Bereich zwischen den Pfostenprofilen und wird bevorzugterweise ganz oder teilweise von diesen umschlossen, da sich hierdurch ein besonders fester und kompakter Verbund erzielen lässt.

In einer weiteren bevorzugten Ausführungsform weist das Verbindungsprofil in seiner der Fahrzeuglängsseite zugewandten Aussenfläche eine sich in seiner Längsrichtung erstreckende Profilnut auf, welche im Querschnitt gesehen beidseitig hinterschnitten ist, was bevorzugterweise dadurch erreicht wird, dass die Profilnut beidseitig durch flanschartige Vorsprünge der Pfostenprofile begrenzt wird. Hierdurch ergibt sich der Vorteil, dass Spannhaken, z.B. wie beim vierten Aspekt gezeigt, zum Festlegen von Blachenseitenwänden von beiden Seiten her formschlüssig in der Profilnut eingehakt werden können, ohne dass es irgendeiner Nacnbearbeitung der Profile bedarf. Je nach Ausgestaltung ist es auch vorgesehen, zusätzliche Funktionselemente in ähnlicher Weise wie beim dritten Aspekt der Erfindung am Beispiel des Eckpfostens gezeigt am Zwischenpfosten zu befestigen.

In noch einer weiteren bevorzugten Ausführungsform der Erfindung sind die Eckpfosten und die Pfostenprofile der Zwischenpfosten aus dem gleichen Profilmäterial hergestellt, wodurch sich Kosten und Logistikaufwand senken lassen.

Ein sechster Aspekt der Erfindung betrifft Zwischenpfosten für einen Fahrzeugaufbau gemäss dem fünften Aspekt der Erfindung.

Ein siebter Aspekt der Erfindung betrifft einen Eckpfosten für einen Fahrzeugaufbau gemäss dem dritten oder vierten Aspekt der Erfindung, welcher bevorzugterweise aus einem einstückigen Aluminiumprofil besteht, ein achter Aspekt ein Profilhalbzeugmaterial zur Herstellung eines solchen Eckpfostens durch Ablängen. Aus solchen Eckpfosten und Profilhalbzeugmaterialien lassen sich durch Kombination mit Standardbauteilen Fahrzeugaufbauten gemäss dem dritten oder vierten Aspekt der Erfindung herstellen.

Weitere bevorzugte Ausführungen der Erfindung ergeben sich aus den abhängigen Ansprüchen sowie aus der nun folgenden Beschreibung anhand der Figuren. Dabei zeigen:
Fig. 1 eine perspektivische Ansicht eines ersten erfindungsgemässen Fahrzeugaufbaus mit vollständig geschlossener Blachenseitenwand;
Fig. 2 eine perspektivische Ansicht des Fahrzeugaufbaus aus Fig. 1 mit teilweise geöffneter Blachenseitenwand;
Fig. 3 einen Querschnitt durch eine Blachenseitenwand des Fahrzeugaufbaus aus Fig. 1 entlang der Linie A-A in Fig. 1;
Fig. 4 einen Querschnitt durch einen Eckpfosten des Fahrzeugaufbaus aus Fig. 1 entlang der Linie B-B in Fig. 1;
Fig. 5 eine perspektivische Ansicht eines zweiten erfindungsgemässen Fahrzeugaufbaus;
Fig. 6 einen Querschnitt durch den linken vorderen Eckpfosten des Fahrzeugaufbaus aus Fig. 5 entlang der Linie C-C in Fig. 5;
Fig. 7 einen Querschnitt durch den linken hinteren Eckpfosten des Fahrzeugaufbaus aus Fig. 5 entlang der Linie D-D in Fig. 5;
Fig. 8 einen Querschnitt durch einen Eckpfosten eines dritten erfindungsgemässen Fahrzeugaufbaus;
Fig. 9 einen Querschnitt durch einen Eckpfosten eines vierten erfindungsgemässen Fahrzeugaufbaus
Fig. 10 einen Querschnitt durch einen Eckpfosten eines fünften erfindungsgemässen Fahrzeugaufbaus;
Fig. 11 einen Querschnitt durch einen Zwischenpfosten eines sechsten erfindungsgemässen Fahrzeugaufbaus; und
Fig. 12 einen Querschnitt durch einen Zwischenpfosten eines siebten erfindungsgemässen Fahrzeugaufbaus.

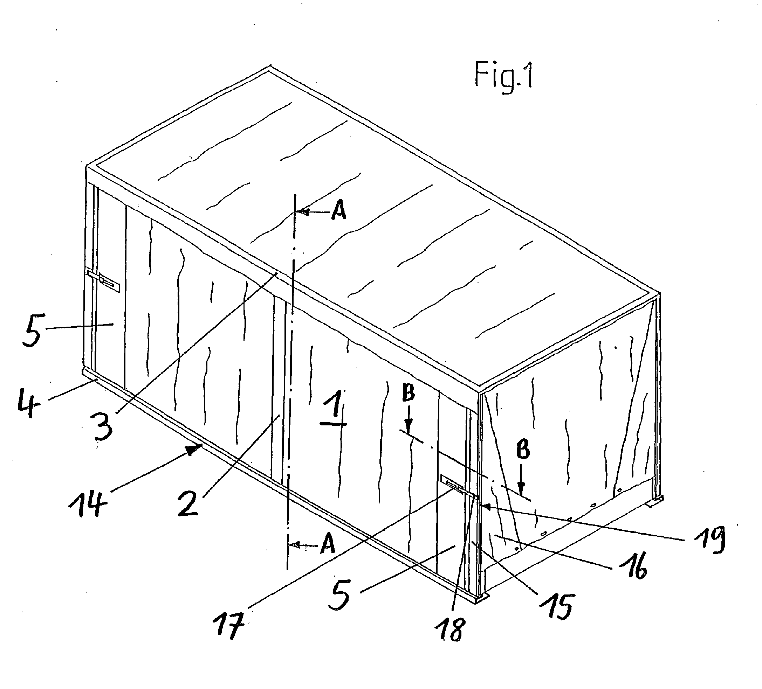

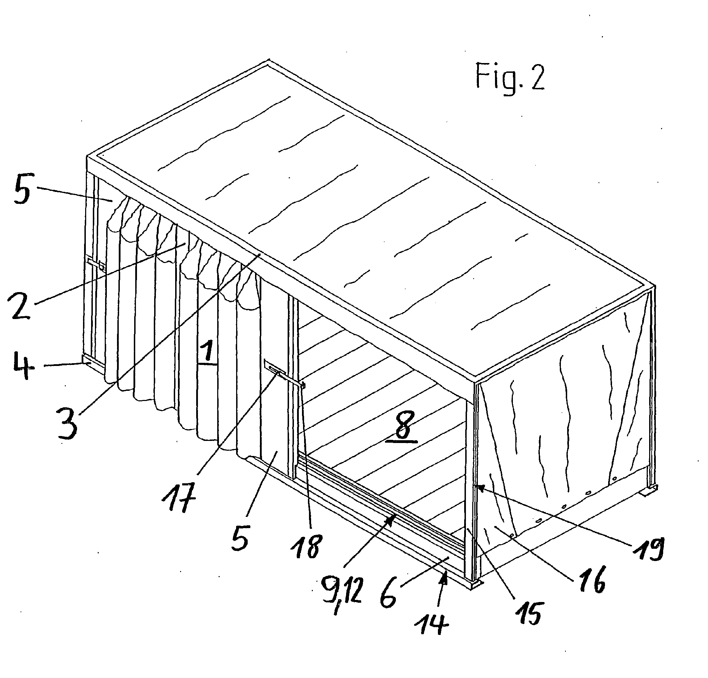

Eine bevorzugte Ausführungsform eines erfindungsgemässen Aufbaus eines Strassennutzfahrzeugs ist in den Figuren 1 bis 4 dargestellt. Wie aus den Figuren 1 und 2 hervorgeht, welche den Fahrzeugaufbau jeweils in einer perspektivischen Draufsicht zeigen, und zwar einmal mit vollständig geschlossener Seitenwand (Fig. 1) in der für den Transportbetrieb bestimmten Situation und einmal. mit teilweise geöffneter Seitenwand (Fig. 2) in einer für das Be- und Entladen bestimmten Situation, weist der Fahrzeugaufbau ein Dach und Wände aus Blachenmaterial auf, welche bei geschlossenen Seiten- und Rückwänden einen geschlossenen Laderaum bilden. Beide Seitenwände 1 des Fahrzeugaufbaus sind im vorliegenden Fall als in Längsrichtung schiebbare Blachenseitenwände 1 ausgestaltet und erstrecken sich zwischen einem oberen Seitenlängsträger 3 und einem unteren Seitenlängsträger 4 einer Tragstruktur des Aufbaus, wobei sie an beiden Seitenlängsträgern 3, 4 in Längsrichtung derselben geführt und vom oberen Seitenlängsträger 3 zusätzlich auch getragen werden. Die Seitenlängsträger 3, 4 sind im vorliegenden Fall aus einem einstückigen stranggepressten Aluminiumprofilmaterial. In der Mitte ihrer maximalen Längserstreckung weisen die Blachenseitenwände 1 jeweils einen fest mit ihnen verbundenen Seitenwandmittelpfosten 2 auf, welcher ebenfalls zwischen den Seitenlängsträgern 3, 4 angeordnet und von diesen geführt in Längsrichtung verschiebbar ist, sofern dabei auch der mit ihnen verbundene Teil der Blachenseitenwand 1 verschoben wird. Wie aus Fig. 2 ersichtlich ist, ist es durch ein Verschieben der Blachenseitenwand 1 unter Faltung derselben möglich, die hinter der Blachenseitenwand 1 befindliche Ladefläche 8 des Fahrzeugaufbaus zum Be- und Entladen zugänglich zu machen, wobei bei der in Fig. 2 dargestellten Öffnungsweite mit der Blachenseitenwand 1 zwangsläufig auch der Seitenwandmittelpfosten 2 verschoben wird und somit automatisch innerhalb der Längserstreckung der gerafften Blachenseitenwand 1 verbleibt. Bei kleineren Öffnungsweiten ist es hingegen möglich, die Blachenseitenwand 1 nur im Bereich eines ihrer beiden Enden zu verschieben, so dass in einem solchen Fall der Seitenwandmittelpfosten 2 an seinem für den Transportbetrieb vorgesehenen Ort gemäss Fig. 1 verbleiben kann, sofern auch die Blachenseitenwand 1 in diesem Bereich nicht verschoben wird. Wird die in Fig. 2 dargestellte geöffnete Blachenseitenwand 1 wieder nach rechts verschoben und vollständig geschlossen, wie dies in Fig. 1 dargestellt ist, so wird auch der Seitenwandmittelpfosten 2 automatisch wieder an dem für den Transportbetrieb für ihn vorgesehenen Ort angeordnet. Der Seitenwandmittelpfosten 2 verbleibt also bei jeder durch Verschieben einstellbaren Position der Blachenseitenwand 1 zwangsläufig innerhalb der Längserstreckung derselben, so dass er die von der Blachenseitenwand 1 freigegebene Ladeöffnung niemals versperren kann. Zudem wird er beim Wiederverschliessen derselben automatisch wieder an dem für den Transport für ihn vorgesehenen Ort positioniert, woraus eine wesentliche Erleichterung der Bedienung des Fahrzeugaufbaus und eine deutliche Steigerung der Betriebssicherheit resultiert.

Wie ebenfalls aus den Figuren 1 un 2 ersichtlich ist, sind die Enden der Blachenseitenwände 1 als starre Schiebetürenelemente 5 ausgebildet, welche sich ebenfalls zwischen dem oberen und dem unteren Seitenlängsträger 3, 4 erstrecken und bei Verschiebung durch diese geführt werden. Die Schiebetürenelemente 5 weisen Hakenelemente 18 mit Spannhebeln 17 auf, mit denen sie an den Eckpfosten 15 der Tragkontruktion festgelegt werden können, wodurch bei Festlegung beider Enden gleichzeitig auch eine Zugspannung in der jeweiligen Blachenseitenwand 1 erzeugt und diese dadurch gespannt wird.

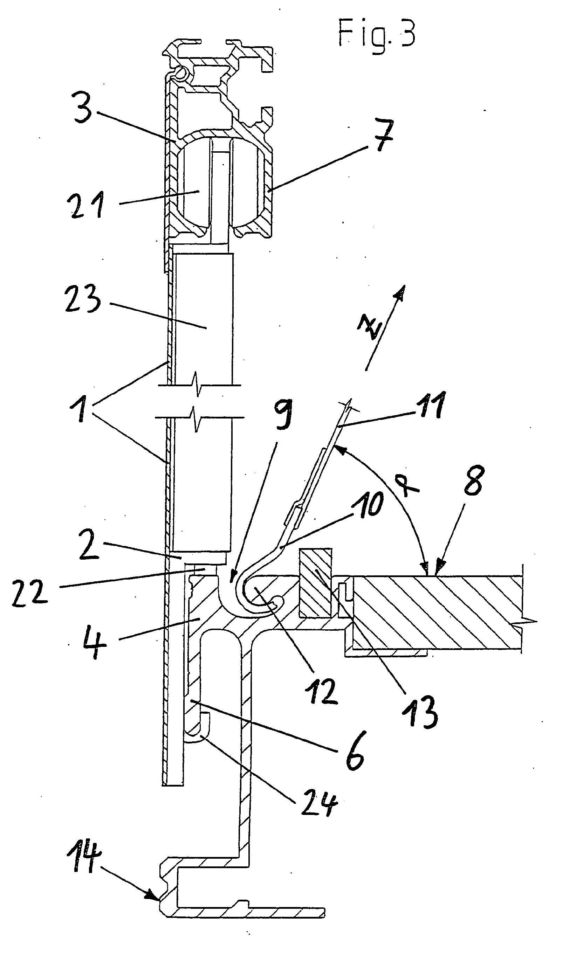

Wie aus Fig. 3 hervorgeht, welche einen Querschnitt entlang der Linie A-A in Fig. 1 durch die linke Seitenwand des Fahrzeugaufbaus zeigt, ist der Seitenwandmittelpfosten 2 in einer durch Aufnähen von Blachenmaterial auf die Blachenseitenwand 1 gebildeten Umschliessung 23 angeordnet und wird mit Laufrollen 21 in einer Längsführungsnut 7 im oberen Seitenlängsträger 3 geführt, in welcher auch die Blachenseitenwand 1 mit ähnlichen Laufrollen aufgehängt ist und geführt wird. Wie weiter ersichtlich ist, stützt sich der Seitenwandmittelpfosten 2 mit Rädern 22 in Längsrichtung verschiebbar auf einer horizontalen Fläche des unteren Seitenlängsträgers 4 ab, so dass er von diesem getragen wird und gegebenenfalls den oberen Seitenlängsträger 3 vertikal unterstützen kann. In Längsrichtung wird der Seitenwandmittelpfosten 2 am unteren Seitenlängsträger 4 durch Umgreifen einer Längsführungsnase 6 des Seitenlängsträgers 4 mit Führungselementen 24 geführt. An dieser Längsführungsnase 6 wird auch die Blachenseitenwand 1 auf ähnliche Weise in Längsrichtung geführt.

Wie des Weiteren aus den Figuren 2 und 3 ersichtlich wird, weisen die unteren Seitenlängsträger 4, welche die Ladefläche 8 seitlich begrenzen und bündig mit dieser abschliessen, auf ihrer Oberseite eine über ihre gesamte Länge sich erstreckende Profilnut 9 auf, welche in Richtung zur Ladefläche 8 hin bogenförmig nach oben zeigend hinterschnitten ist, derartig, dass die gerundete ladeflächenseitige Begrenzung der Befestigungsnut 9 zusammen mit der oberen Begrenzung des Hinterschnitts einen Befestigungsvorprung 12 mit einem im Querschnitt gesehen kreisrund ausgeformten freien Ende bildet. Eingehängt in die Befestigungsnut 9 ist ein Spanngurtbefestigungselement 10, an dem ein Spanngurt 11 befestigt ist, mit welchem eine Ladung auf der Ladefläche 8 festgezurrt ist. Dabei übt der Spanngurt 11 eine Zugkraft in Zugrichtung Z auf das Spanngurtbefestigungselement 10 aus, wodurch sich ein Zugwinkel α von im dargestellten Fall etwa 65° ergibt. Wie deutlich zu erkennen ist, umschliesst das Spanngurtbefestigungselement 10 das freie Endes des Befestigungsvorsprungs 12 teilweise mit einer dessen Aussenkontur im wesentlichen entsprechende Gegenkontur, wodurch sich dieses bei verschiedenen Zugrichtungen Z des Spanngurts 11 bzw. unterschiedlichen Zugwinkeln α durch Drehung um eine im Zentrum des Befestigungsvorsprungs 12 liegende Drehachse herum gegenüber dem unteren Seitenlängsträger 4 verdrehen kann, so dass bei allen im Betrieb üblichen Zugwinkeln α eine möglichst direkte Krafteinleitung in den Seitenlängsträger 4 erfolgt. Dabei ist die Umschliessungserstreckung derartig gewählt, dass ein Einführen oder Entnehmen des Spanngurtfestigungselements 10 in oder aus der Befestigungsnut 9 nur in einer vollständig zur Ladefläche 8 hin geneigten Position desselben möglich ist, welche sich beim Verzurren einer Ladung mit einem an dem Spanngurtbefestigungselement 10 befestigten Spanngurt 11 normalerweise nicht ergibt und im vorliegenden Fall erst nach dem Entfernen der in einer Begrenzungsnut in der Oberseite des unteren Seitenlängsträgers 4 angeordneten Anschlagleiste 13 möglich ist.

Wie ebenfalls aus den zuvor erwähnten Figuren erkennbar ist, weisen die unteren Seitenlängsträger 4 an ihren Aussenseiten Anfahrschutzkanten 14 auf, welche seitlich den äusserten Überstand derselben bilden und dem Schutz der übrigen Formelemente der Seitenlängsträger 4 vor mechanischer Beschädigung durch Ladehilfsmittel dienen.

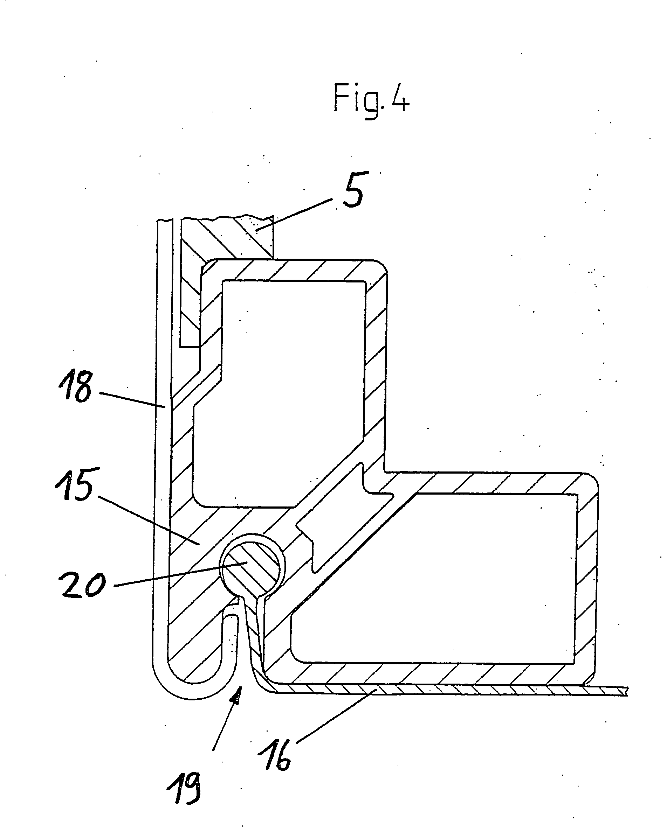

Wie aus Fig. 4, welche einen Querschnitt entlang der Linie B-B aus Fig. 1 durch den linken hinteren Eckpfosten des Fahrzeugaufbaus aus Fig. 1 zeigt, in Kombination mit Fig. 1 erkennbar wird, ist der linke Schräglappen 16 der Blachenrückwand des Fahrzeugaufbaus mit einem Keder 20 in einer in Eckpfostenlängsrichtung durchgehenden Profilnut 19 auf der zur Rückseite des Fahrzeugaufbaus orientierten Aussenseite des Eckpfostens 15 formschlüssig befestigt, wobei er bei ordnungsgemäss geschlossener Blachenrückwand zum Eintritt in die Profilnut 19 um 90° umgelenkt wird. Der Eckpfosten besteht im vorliegenden Fall aus einem stranggepressten Aluminiumprofil. Ebenfalls in der Profilnut 9 angeordnet ist das freie Ende des Hakenelements 18, mit welchem das hintere Schiebetürenelement 5 der Blachenseitenwand 1 in der dargestellten Situation unter leichter Vorspannung gegen den Eckpfosten 15 gezogen und dadurch festgelegt wird, wobei das freie Ende des Hackenelements 18 und der Schräglappen 15 sich im wesentlichen parallel in der Profilnut 19 erstrecken. Durch die zuvor beschriebene Konstruktion lassen sich der Schräglappen 16 der Blachenrückwand und das Schiebetürenelement 5 des hinteren Endes der Blachenseitenwand 1 auf einfache Weise mit dem durch Ablängen aus einem Profilhalbzeugmaterial hergestellten Eckpfosten 15 verbinden, ohne dass hierfür spezifische Nacharbeiten an demselben erforderlich wären.

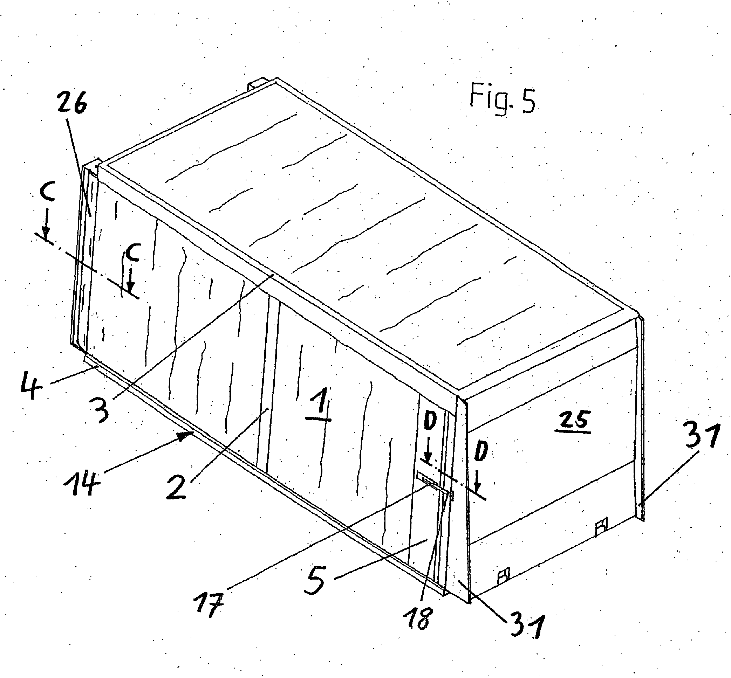

Eine weitere bevorzugte Ausführungsform eines erfindungsgemässen Aufbaus eines Strassennutzfahrzeugs ist in den Figuren 5 bis 7 dargestellt. Wie aus Fig. 5 hervorgeht, welche den Fahrzeugaufbau in einer perspektivischen Draufsicht in vollständig geschlossenem Zustand zeigt, weist der Fahrzeugaufbau einen ähnlichen Aufbau wie der in Fig. 1 gezeigte auf. Im Gegensatz zu diesem wird hier jedoch die Rückwand von einer Ladebordwand 25 gebildet, welche seitlich von Wasserabweiserprofilen 31 flankiert ist. Auch weisen hier nur die rückseitigen Enden der Blachenseitenwände 1 starre Schiebetürenelemente 5 mit Hakenelementen 18 und Spannhebeln 17 auf. Stirnseitig sind die Blachenseitenwände 1 hingegen mit Rollenspannmechanismen 26 an den vorderen Eckpfosten 15 festgelegt.

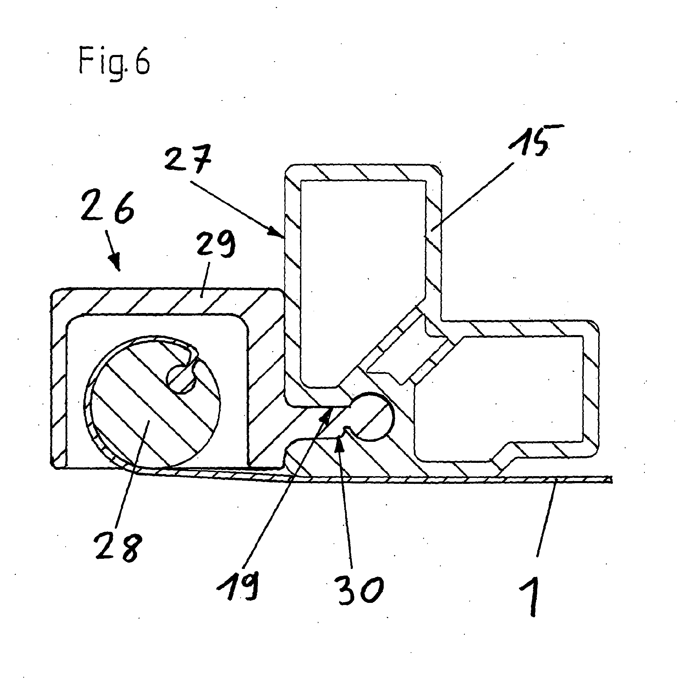

Wie aus Fig. 6 hervorgeht, welche den vorderen linken Eckpfosten 15 und den Rollenspannmechanismus 26 im Schnitt entlang der Linie C-C in Fig. 5 zeigt, ist der Eckpfosten 15 aus einem einstückigen Strangpressprofil aus Aluminium hergestellt und weist bezüglich Form und Dimensionen den gleichen Querschnitt auf wie der in Fig. 4 gezeigten Eckpfosten 15. Die in Längsrichtung des Eckpfostens 15 verlaufende Profilnut 19, welche von aussen gesehen hinterschnitten ist und im Bereich des Nutgrunds einen kreisförmigen Querschnitt besitzt, befindet sich in derjenigen Aussenfläche 27 des Eckpfostens 15, welche an der Stirnseite des Fahrzeugaufbaus angeordnet ist. Diese Aussenfläche 27 ist eben und die Profilnut 19 dringt senkrecht zu ihr in den Eckpfosten 15 ein. Der Rollenspannmechanismus 26 umfasst eine Spannrolle 28 mit Antrieb (nicht gezeigt), an welcher das Ende der Blachenseitenwand 1 befestigt ist, und ein Gehäuse 29 aus einem Aluminiumprofil, in welchem die Spannrolle 28 gelagert ist und über welches sie mit dem Eckpfosten 15 verbunden ist. Dieses Verbinden erfolgt dadurch, dass eine Profilnase 30 des Gehäuses 29 mit einem kederähnlich geformten freien Ende in Längsrichtung in die Profilnut 19 eingeschoben wird, wodurch sich ein Formschluss in Richtung quer zur Längserstreckung des Eckpfostens 15 bzw. der Spannrolle 28 zwischen der Profilnase 30 und den Begrenzungen der Profilnut 19 ergibt.

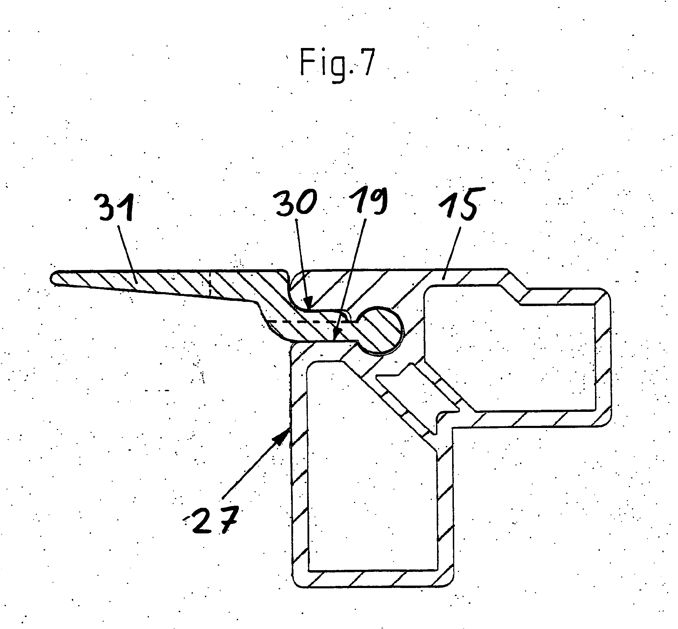

Fig. 7 zeigt einen Schnitt durch den hinteren linken Eckpfosten 15 und das an diesem befestigte Wasserabweiserprofil 31 entlang der Linie D-D in Fig. 5. Wie zu erkennen ist, weist der hintere Eckpfosten 15 das gleiche Profil auf wie der vordere Eckpfosten 15, wobei jedoch die die Profilnut 19 aufweisende Aussenfläche 27 des Eckpfostens 15 an der Rückseite des Aufbaus angeordnet ist. Das Wasserabweiserprofil 31 ist auf identische Weise wie der Rollenspannmechanismus 26 am Eckpfosten befestigt und weist etwa in der Mitte seiner Längserstreckung eine Ausnehmung auf (durch gestrichelte Linien angedeutet), durch welche das freie Ende des Hackenelements 18, wie in Fig. 4 gezeigt, in die Profilnut 19 eingehängt werden kann. Im vorliegenden Fall handelt es sich bei den Wasserabweiserprofilen 31 um gegossene Kunststoffteile, es ist jedoch auch vorgesehen, diese aus Profilhalbzeugmaterial aus Kunststoff oder Aluminium herzustellen.

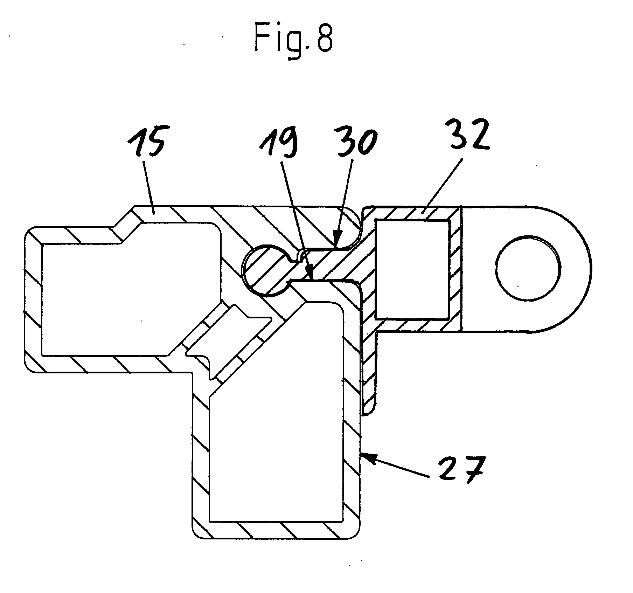

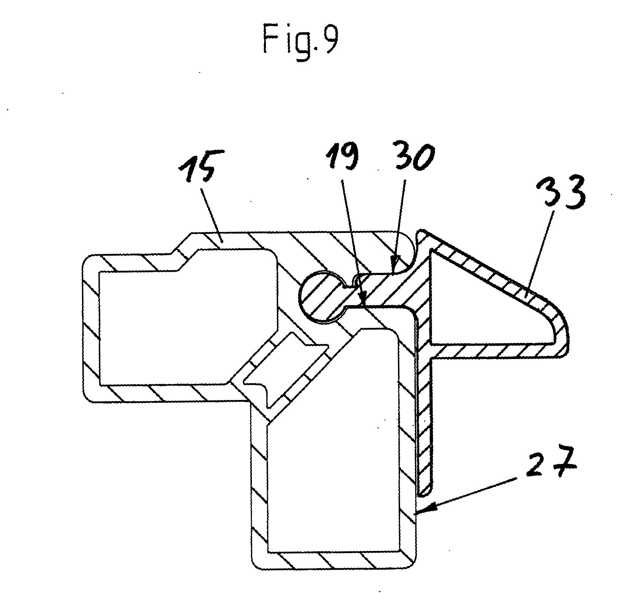

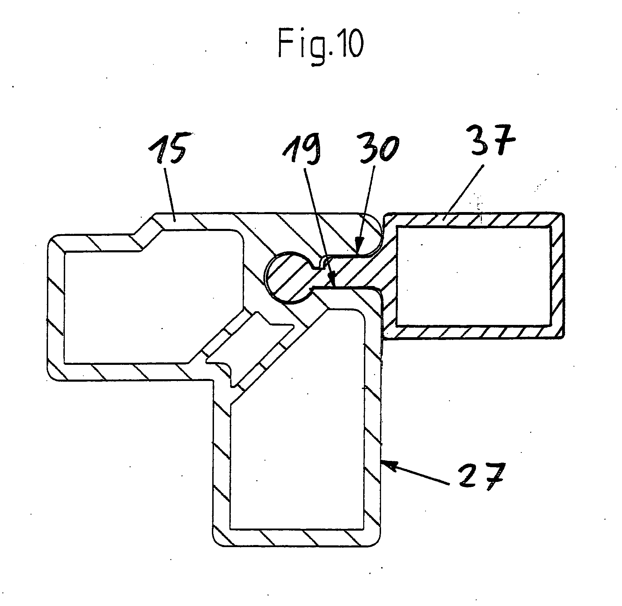

Die Figuren 8, 9 und 10 zeigen ähnliche Ansichten wie die Figuren 6 und 7 mit dem Unterschied, dass hier an Stelle eines Rollenspannmechanismus 26 oder eines Wasserabweiserprofils 31 ein Scharnierprofil 32 (Fig. 8), eine elastische Anfahrschutzleiste 33 (Fig. 9) oder ein Verstärkungs- bzw Verlängerungsprofil 37 (Fig. 10) am Eckpfosten befestigt ist.

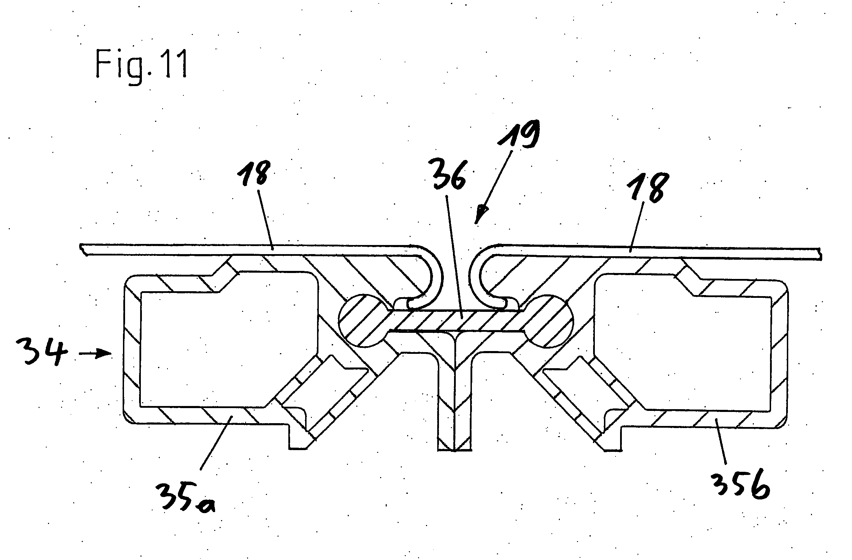

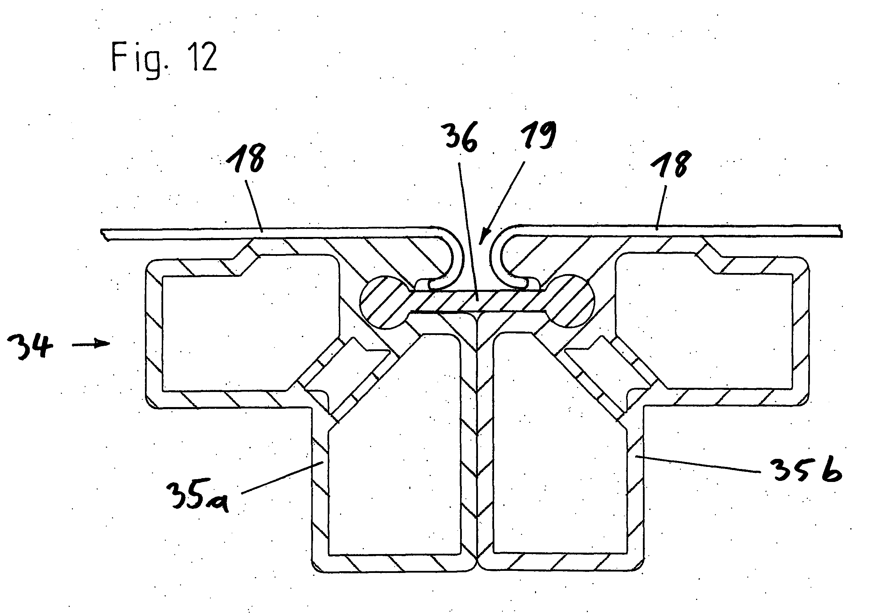

Die Figuren 11 und 12 zeigen jeweils einen Schnitt durch einen Zwischenpfosten 34 von weiteren erfindungsgemässen Fahrzeugaufbauten (nicht als Ganzes dargestellt). Der Grundaufbau dieser Fahrzeugaufbauten ist ähnlich wie derjenige gemäss Fig. 1, wobei der Aufbau hier jedoch im wesentlichen aus zwei hintereinander angeordneten solchen Fahrzeugaufbauten besteht, welche über die gezeigten Zwischenpfosten 34 miteinander verbunden sind. Die Zwischenpfosten 34 bestehen jeweils aus zwei identischen Pfostenprofilen 35a, 35b, welche durch Formschluss über ein Verbindungsprofil 36 spiegelbildlich und grossflächig direkt aneinander angrenzend miteinander verbunden sind. Dabei umschliessen Sie das Verbindungsprofil 36 im wesentlichen und bilden auf derjenigen Aussenfläche des Zwischenpfostens 34, welche einen Teil der Seitenwand des Aufbaus bildet, eine Profilnut 19, welche beidseitig hinterschnitten ist, so dass die mit Spannmitteln 17 versehenen Hakenelemente 18 zum Festlegen der schiebbaren Blachenseitenwände 1 in die Profilnut 19 eingehängt werden können.

Während der in Fig. 11 gezeigte Zwischenpfosten 34 aus zwei identischen Pfostenprofilen 35a, 35b gebildet ist, welche in Richtung quer zur Fahrtrichtung flacher ausgebildet sind als die Eckpfosten 15 des Aufbaus (siehe Fig. 1), ist der in Fig. 12 gezeigte Zwischenpfosten 34 durch Verbindung zweier Pfostenprofile 35a, 35b mit einem Verbindungsprofil 36 entstanden, welche identisch sind mit den Eckpfosten 15 des Fahrzeugaufbaus.

## Patentansprüche

1. Fahrzeugaufbau, insbesondere Strassenfahrzeugaufbau, mit einer Blachenseitenwand (1) und mindestens einem Seitenwandmittelpfosten (2), welche sich zwischen einem oberen Seitenlängsträger (3) und einem unteren Seitenlängsträger (4) einer Tragstruktur des Fahrzeugaufbaus erstrecken, wobei die Blachenseitenwand (1) und der Seitenwandmittelpfosten (2) entlang der Seitenlängsträger (3, 4) verschiebbar sind zur Ermöglichung eines Zugriffs von aussen her auf den hinter der Blachenseitenwand (1) befindlichen Raum, **dadurch gekennzeichnet, dass** der Seitenwandmittelpfosten (2) derartig mit der Blachenseitenwand (1) wirkverbunden ist, dass dessen Erstreckung in Längsrichtung der Seitenlängsträger (3, 4) in jeder durch ein Verschieben entlang der Seitenlängsträger (3, 4) einstellbaren Position der Blachenseitenwand (1) innerhalb der Erstreckung in Längsrichtung der Seitenlängsträger (3, 4) derselben verbleibt und der Seitenwandmittelpfosten (2) bei vollständig geschlossener Blachenseitenwand (1) an einer gewünschten Position zwischen den Seitenlängsträgern (3, 4) angeordnet ist.

2. Fahrzeugaufbau nach Anspruch 1, **dadurch gekennzeichnet, dass** der Seitenwandmittelpfosten (2) direkt mit der Blachenseitenwand (1) verbunden ist.

3. Fahrzeugaufbau nach Anspruch 2, **dadurch gekennzeichnet, dass** der Seitenwandmittelpfosten (2) in einer oder mehreren an der Blachenseitenwand (1) gebildeten Umschliessungen (23) angeordnet ist.

4. Fahrzeugaufbau nach einem der vorangehenden Ansprüche, **dadurch gekennzeichnet, dass** der Seitenwandmittelpfosten (2) in die Blachenseitenwand (1) integriert ist, derart, dass Seitenwandmittelpfosten (2) und Blachenseitenwand (1) eine unverlierbare, insbesondere untrennbare Einheit bilden.

5. Fahrzeugaufbau nach einem der vorangehenden Ansprüche, **dadurch gekennzeichnet, dass** mindestens ein Ende der Blachenseitenwand (1) ein starres, sich zwischen dem oberen und dem unteren Seitenlängsträger (3, 4) erstreckendes Schiebetürenelement (5) aufweist, mit dem sich dieses Ende in Längsrichtung verschieben und zumindest bei vollständig geschlossener Blachenseitenwand (1), insbesondere unter Erzeugung einer Zugspannung in der Blachenseitenwand (1), festlegen lässt.

6. Fahrzeugaufbau nach einem der vorangehenden Ansprüche, **dadurch gekennzeichnet, dass** die Blachenseitenwand (1) und der Seitenwandmittelpfosten (2) am oberen Seitenlängsträger (3) und/oder am unteren Seitenlängsträger (4) jeweils entlang gemeinsamer Längsführungen (6, 7) geführt sind.

7. Blache mit integriertem Seitenwandmittelpfosten (2) für einen Fahrzeugaufbau nach einem der vorangehenden Ansprüche.

8. Fahrzeugaufbau, insbesondere Strassenfahrzeugaufbau, insbesondere nach einem der Ansprüche 1 bis 6, mit Eckpfosten (15), wobei mindestens einer der Eckpfosten (15) aus Profilmaterial besteht und in einer seiner Aussenflächen (27), welche an einer Aussenseite des Fahrzeugaufbaus angeordnet ist, eine sich in seiner Längsrichtung erstreckende Profilnut (19) aufweist, wobei die Profilnut (19) im Querschnitt gesehen Hinterschnitte aufweist, zur Ermöglichung einer Befestigung eines Funktionselements (26, 31, 32, 33) am Eckpfosten (15) durch Formschluss quer zur Längsrichtung des Eckpfostens 15) zwischen den Begrenzungen der Profilnut (19) und einer von aussen in die Profilnut (19) eintretenden Körperlichkeit (30) des Funktionselements (26, 31, 32, 33).

9. Fahrzeugaufbau nach Anspruch 8, **dadurch gekennzeichnet, dass** die Profilnut (19) in einer Aussenfläche (27) ist, die an der Stirnseite oder an der Rückseite des Fahrzeugaufbaus angeordnet ist.

10. Fahrzeugaufbau nach einem der Ansprüche 8 bis 9, **dadurch gekennzeichnet, dass** die Aussenfläche (27) des Eckpfostens (15), in welcher die Profilnut (19) angeordnet ist, im wesentlichen eben ist, und insbesondere, dass die Profilnut (19) im wesentlichen senkrecht zu dieser Aussenfläche (27) in den Eckpfosten (15) eindringt.

11. Fahrzeugaufbau nach einem der Ansprüche 8 bis 10, **dadurch gekennzeichnet, dass** der Eckpfosten (15) einstückig ausgebildet ist.

12. Fahrzeugaufbau nach einem der Ansprüche 8 bis 11, **dadurch gekennzeichnet, dass** der Nutgrund der Profilnut (19) eine kreisförmige, ovale oder mehreckige, insbesondere drei- oder viereckige Querschnittsform aufweist, zur formschlüssigen Befestigung einer kederförmigen Körperlichkeit (30) eines Funktionselements (26, 31, 32, 33) in der Profilnut (19).

13. Fahrzeugaufbau nach einem der Ansprüche 8 bis 12 mit einem durch Formschluss mit den Begrenzungen der Profilnut (19) am Eckpfosten (15) befestigten Funktionselement (26, 31, 32, 33).

14. Fahrzeugaufbau nach Anspruch 13, **dadurch gekennzeichnet, dass** das Funktionselement (26, 31, 32, 33) ein starres oder elastisches Profilelement ist, insbesondere ein Wasserabweiserprofil (31), ein Scharnierprofilelement (32) oder ein Anfahrschutzprofil (33), und insbesondere, dass sich das Profilelement im wesentlichen über die gesamte Länge des Eckpfostens (15) erstreckt.

15. Fahrzeugaufbau nach einem der Ansprüche 13 bis 14, **dadurch gekennzeichnet, dass** das Funktionselement (26, 31, 32, 33) einen Spannmechanismus für eine Blachenseitenwand (1) umfasst, insbesondere eine Spannrolle (28) mit Antriebsmitteln zum Spannen einer Blachenseitenwand (1) durch teilweises Aufrollen derselben.

16. Fahrzeugaufbau, insbesondere Strassenfahrzeugaufbau, insbesondere nach einem der Ansprüche 1 bis 6 oder 8 bis 15, mit einer in Längsrichtung verschiebbaren Blachenseitenwand (1), wobei mindestens ein Ende derselben an einem Eckpfosten (15) des Fahrzeugaufbaus durch Einhängen von einem mit Spannmitteln (17) versehenen Hakenelement (18) in eine Öffnung (19) in dem Eckpfosten (15) an diesem festlegbar ist, **dadurch gekennzeichnet, dass** die Öffnung (19) eine in Längsrichtung des Eckpfostens (15) durchgehende Profilnut (19) ist.

17. Fahrzeugaufbau nach Anspruch 16, **dadurch gekennzeichnet, dass** ein Blachenrückwandelement (16) formschlüssig, insbesondere mit einem Keder in einer entsprechenden Profilnut (19) am Eckpfosten (15) befestigt ist.

18. Fahrzeugaufbau nach Anspruch 17, **dadurch gekennzeichnet, dass** das Blachenrückwandelement (16) unter Umlenkung, insbesondere um etwa 90°, in die Profilnut (19) im Eckpfosten eintritt.

19. Fahrzeugaufbau nach Anspruch 18, **dadurch gekennzeichnet, dass** das Ende der Blachenseitenwand (1) durch Einhängen des Hakenelements (18) in die Profilnut (19), in welcher das Blachenrückwandelement (16) befestigt ist, befestigbar ist.

20. Fahrzeugaufbau nach Anspruch 19, **dadurch gekennzeichnet, dass** sich das Blachenrückwandelement (16) in der Profilnut (19) im wesentlichen parallel zu dem in der Nut (19) angeordneten freien Ende des Hakenelements (18) erstreckt.

21. Fahrzeugaufbau nach einem der Ansprüche 16 bis 20, **dadurch gekennzeichnet, dass** die Profilnut (19) auf einer Ausseite des Eckpfostens (15) angeordnet ist, welche im wesentlichen senkrecht zur Blachenseitenwand (1) verläuft.

22. Fahrzeugaufbau nach einem der Ansprüche 16 bis 21, **dadurch gekennzeichnet, dass** das Ende der Blachenseitenwand (1) ein starres Schiebetürenelement (5) aufweist, welches bei geschlossener Blachenseitenwand (1) mit dem Hakenelement (18), insbesondere unter Erzeugung einer Zugspannung in der Blachenseitenwand (1), mit dem Eckpfosten (15) verbindbar ist.

23. Fahrzeugaufbau, insbesondere Strassenfahrzeugaufbau, insbesondere nach einem der Ansprüche 1 bis 6 oder 8 bis 22, mit Eckpfosten (15) und zwischen den Eckpfosten angeordneten Zwischenpfosten (34), welche aus Profilmaterial sind, **dadurch gekennzeichnet, dass** die Zwischenpfosten (34) jeweils aus zwei parallel zueinander angeordneten Pfostenprofilen (35a, 35b) gebildet sind, welche mittels eines Verbindungsprofils (36) im wesentlichen über ihre gesamte Längserstreckung formschlüssig in Richtung quer zu ihrer Längserstreckung miteinander verbunden sind.

24. Fahrzeugaufbau nach Anspruch 23, **dadurch gekennzeichnet, dass** die Pfostenprofile (35a, 35b) identisch sind und insbesondere, dass diese spiegelbildlich zueinander angeordnet sind.

25. Fahrzeugaufbau nach einem der Ansprüche 23 bis 24, **dadurch gekennzeichnet, dass** die Pfostenprofile (35a, 35b) direkt aneinander angrenzen, insbesondere unter Bildung grossflächiger Berührungsflächen, welche inbesondere quer zu einer vorgesehenen Fahrtrichtung verlaufen.

26. Fahrzeugaufbau nach einem der Ansprüche 23 bis 25, **dadurch gekennzeichnet, dass** das Verbindungsprofil (36) im Bereich zwischen den Pfostenprofilen (35a, 35b) angeordnet ist, und insbesondere, dass dieses von den Pfostenprofilen (35a, 35b) umschlossen ist.

27. Fahrzeugaufbau nach einem der Ansprüche 23 bis 26, **dadurch gekennzeichnet, dass** das Verbindungsprofil (36) in seiner der Fahrzeuglängsseite zugewandten Aussenfläche eine sich in seiner Längsrichtung erstreckende Profilnut (19) aufweist, wobei die Profilnut (19) im Querschnitt gesehen beidseitig hinterschnitten ist, zur Ermöglichung eines formschlüssigen Einhakens von mit Spannmitteln (17) versehenen Hakenelementen (18) von beiden Seiten in dieselbe.

28. Fahrzeugaufbau nach einem der Ansprüche 23 bis 27, **dadurch gekennzeichnet, dass** die Eckpfosten (15) und die Pfostenprofile (35a, 35b) der Zwischenpfosten (34) aus einem identischen Profilmaterial sind.

29. Zwischenpfosten für einen Fahrzeugaufbau nach einem der Ansprüche 23 bis 28.

30. Eckpfosten (15), insbesondere aus einem einstückigen Aluminiumprofil, für einen Fahrzeugaufbau nach einem der Ansprüche 8 bis 28.

31. Profilhalbzeugmaterial zur Herstellung der Pfostenprofile (35a, 35b) eines Zwischenpfostens nach Anspruch 29 oder eines Eckpfostens (15) nach Anspruch 30 durch Ablängen.
